# EUROPEAN PATENT APPLICATION

(11) **EP 1 849 989 A1**
(43) Date of publication of application: **31.10.2007**
(21) Application number: 06113112.4
(22) Date of filing: 26.04.2006
(51) Int. Cl.: F02M 35/10, F02B 29/04

(54) **Duct for interconnecting a compressor and an intercooler**

(71) Applicant: Daf Trucks N.V., 5643 TW Eindhoven (NL)
(72) Inventor: KNUBBEN, Christiaan Gerardus, 5626 HD, EINDHOVEN (NL); De Kok, Petrus Cornelis Gerardus, 5591 DB Heeze (NL)
(74) Representative: Aalbers, Arnt Reinier

(57) **Abstract**

The invention relates to a duct for interconnecting separate stages of a compressor or a compressor and an intercooler of an internal combustion engine. The duct (1) comprises a lumen (2) for conveying compressed air and at least one channel (3) for a cooling liquid, which channel at least partially surrounds the lumen (3B) and/or extends inside the lumen (3A). The duct according to the present invention enables effective cooling of compressed air e.g. from 260°C to 220°C at a relatively low pressure drop, thus increasing service life of downstream equipment, in particular a downstream intercooler.

## Description

The invention relates to a duct for interconnecting separate stages of a compressor or a compressor and an intercooler of an internal combustion engine, which duct comprises a lumen for conveying compressed air. The invention also relates to an internal combustion engine, in particular a diesel engine for commercial vehicles, comprising such a duct.

As is explained in European patent application 1 048 832, supercharged engines are generally provided with an intercooler disposed in the supercharging duct and adapted to cool the air leaving the turbocharger unit before it is admitted into the intake manifold. The intercooler typically comprises an air-air heat exchanger, which is disposed in front of the main radiator of the vehicle and through which the flow of air produced by a fan associated with said radiator passes.

To further improve cooling, the supercharged internal-combustion engine (1) according to European patent application 1 048 832 comprises - in addition to the usual turbocharger (3), supercharging duct (7) connecting an outlet of the turbocharger (3) to an intake manifold of the engine (1), intercooler (8) in series with the supercharging duct (7) for cooling the supercharging air of the engine, and forced-ventilation device (14) for cooling the supercharging duct (7) - at least one ducting (18,19) having an inlet aperture (20) facing a fan (10) and an outlet aperture (21) facing a portion (16,17) of the supercharging duct (7).

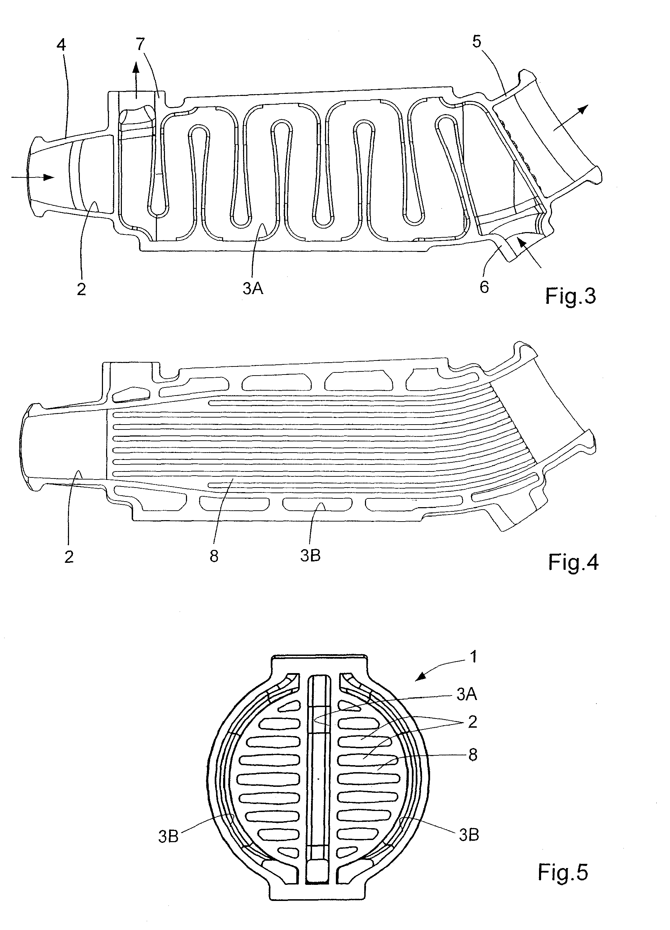

US 4,236,492 relates to an internal combustion engine having a supercharger and two or more supercharger intercoolers or cooling systems respectively having different temperature levels. The individual coolers are arranged in succession in the direction of flow, with the charged air decreasing in temperature and the cooling air increasing in temperature. The embodiment in Figures 2 and 3 comprises one respectively two liquid cooled supercharger intercoolers (11, 12) and an air cooled supercharger intercooler (5).

With increasing turbocharger pressure ratios, necessary for improving the efficiency of internal combustion engines, the temperature of the compressed gas leaving the compressor or a compressor stage also increases. At present, typical pressures and temperatures of gas leaving the compressor are e.g. 4 bar and 260 to 290 °C (depending on ambient temperature). At such conditions, the gas is likely to damage downstream equipment, in particular a downstream intercooler.

It is an object of the present invention to provide an improved duct. To this end, the duct according to the present invention comprises at least one channel for a cooling liquid, which channel at least partially surrounds the lumen for conveying compressed air and/or extends inside the lumen and preferably across the lumen. It is preferred that at least one of the channels undulates. Further, it is preferred that the duct comprises fins and/or projections extending inside the lumen.

The duct, also referred to as "supercharging duct" or "boostpipe", according to the present invention enables effective cooling of compressed air e.g. from 260°C to 220°C at a relatively low pressure drop, thus increasing service life of downstream equipment, in particular a downstream intercooler.

To further increase the efficacy of the duct and the freedom of design, it preferred to form the duct by moulding, in particular by sand-, lost foam- or permanent die moulding, a metal, preferably aluminium, such that the walls of the lumen and the channel(s) and, if present, the fins and/or projections, form an integral whole.

The invention also relates to an internal combustion engine, in particular a diesel engine for commercial vehicles, comprising a compressor, an intercooler, and a duct according to the present invention interconnecting separate stages of the compressor and/or an outlet of the compressor and an inlet of the intercooler.

The invention will now be illustrated with reference to the drawings, which schematically show a preferred embodiment of the present duct.

It is noted that the drawings are not necessarily to scale and that details, which are not required for understanding the present invention, may have been omitted. Further, elements that are at least substantially identical or that perform an at least substantially identical function are denoted by the same numeral.

Figures 1 and 2 are a perspective view and a top view of a boostpipe according to the present invention.

Figures 3 to 5 are cross-sections (III-III; IV-IV; V-V) of the boostpipe shown in Figures 1 and 2.

Figures 6 and 7 are perspective views of two sand cores for defining internal features of the boostpipe.

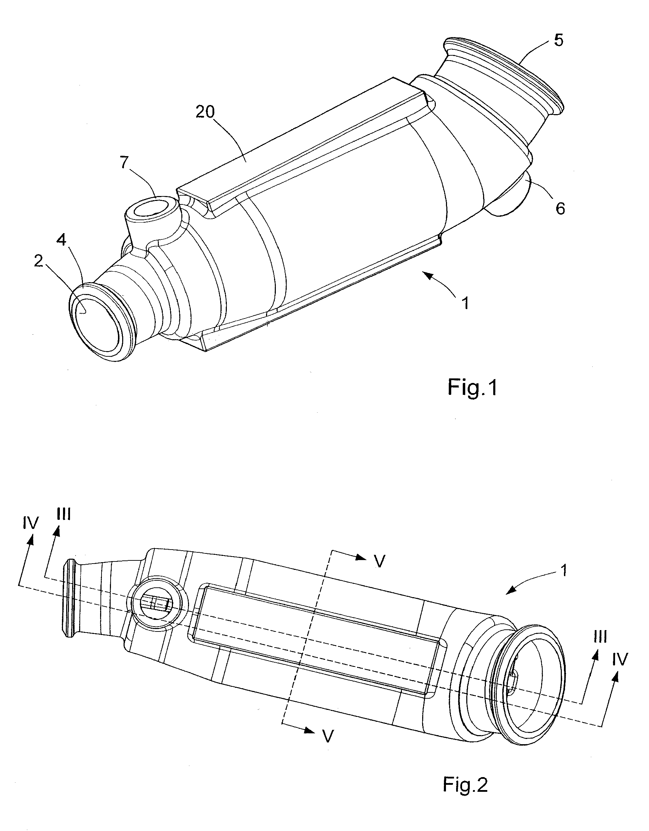

Figures 1 to 5 show a boostpipe 1 according to the present invention for interconnecting a compressor, such as a turbo-compressor, and an intercooler of an internal combustion engine, in particular a diesel engine of a commercial vehicle, such as truck. The boostpipe 1 comprises a lumen 2 for conveying compressed air from the compressor to the intercooler, a plurality of channels 3 (Figures 3 to 5) for conveying a cooling liquid, typically water, in- and outlets 4, 5 for compressed air and in- and outlets 6, 7 for the cooling liquid. The in- and outlets 4, 5 for compressed air are provided with radially protruding rims, which facilitate connecting the boostpipe 1, by means of V-clamps (not shown), to the compressor and the intercooler.

In this example, the lumen 2 diverges in the flow direction and the centreline of the internal lumen 2 and indeed the entire boostpipe 1 is gradually curved in two directions. The position and inclination of the in- and outlets 4, 5 for compressed air have been adapted to the position of the outlet of the compressor respectively the inlet of the intercooler of a specific engine. As a result, pressure drop will be relatively low and in principle no additional pipes or ducts are required to interconnect the said compressor and intercooler by means of the liquid-cooled boostpipe 1.

Further, in this example, the channels 3 for conveying the cooling liquid are three in number, one undulating channel 3A extending across - i.e. through the middle and over the entire diameter of - the lumen 2 and two channels 3B undulating about the lumen 2, each spanning preferably at least 150° of the circumference of the lumen 2. Also, it is generally preferred that the channels extend over a substantial part, preferably at least 70% of the length of the boostpipe.

To further enhance heat exchange, fins 8 extend in the longitudinal direction of the boostpipe 1 and in the transverse direction, interconnecting the inner wall of the lumen 2 and the middle channel 3A.

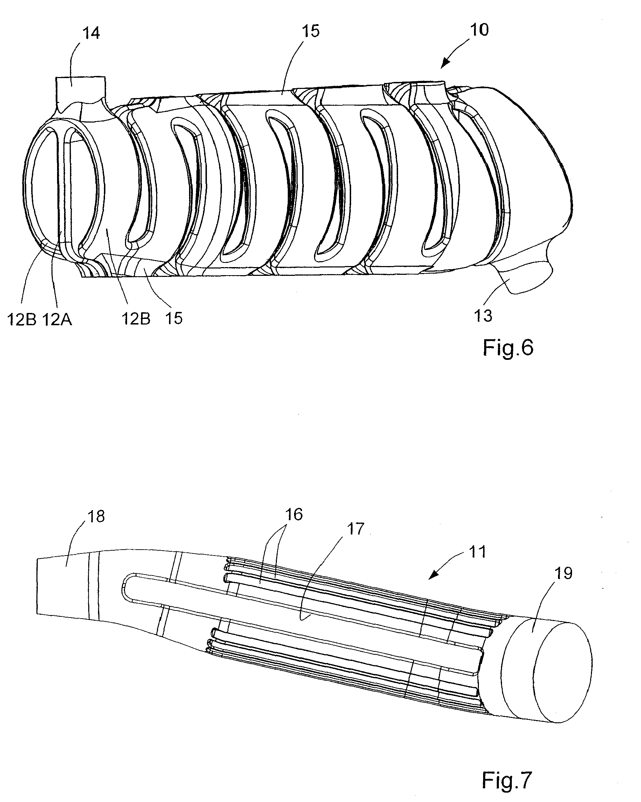

Figures 6 and 7 show sand cores 10, 11 for moulding the boostpipe 1 in Figures 1 to 5. The sand core 10 shown in Figure 6 defines the cooling channels and comprises three undulating (serpentine) sections 12 defining the channels 3 for the cooling liquid, stubs 13, 14 defining the in- and outlets (6, 7) common to these channels 3, and core marks 15 for securing the sand core 10 inside a (sand) mould. The sand core shown in Figure 7 defines the lumen for the compressed gas and comprises a plurality of substantially parallel lamellae 16 defining the spaces in between the fins 8, a slot 17 extending substantially perpendicular to the lamellae 16 for accommodating the middle section 12A of the sand core in Figure 6, and stubs 18, 19 defining the in- and outlets (4, 5) for the compressed gas as well as for securing the sand core inside the mould.

During production, the sand core 11 for the lumen, which consists of at least two parts, is positioned inside the sand core 10 for the cooling channels and glued together. Subsequently, the cores 10, 11 are placed in a sand mould and a metal, preferably aluminium, is poured into the mould, in a manner known in itself. After the metal has cooled down the semi-finished product is removed from the mould and the sand is removed from the lumen 2 and the channels 3. Finally, strips 20 are welded into the openings resulting from the core marks 15, thus rendering the channels 3 liquid-tight.

It is noted that other core mark systems are also possible, such as systems involving the use of press-fitted plugs. Further, if no middle channel (3A) is present, the core (11) for the lumen may consist of a single part (no gluing required).

The boostpipe according to the present example takes up only slightly more space than a similar existing boostpipe without cooling and (thus) can be fitted in existing engine designs. The boostpipe can be connected e.g. to the main cooling system of the engine or a separate system. Experiments have shown that the boostpipe according to this example allows effective cooling of compressed air e.g. from 260°C to 220°C (at relatively low ambient temperature) or from 290°C to 230°C (at relatively high ambient temperature), thus preventing damage to the downstream intercooler.

The invention is not restricted to the above-described embodiments, which can be varied in a number of ways within the scope of the claims. For instance, the duct according to the present invention can positioned between separate stages of a compressor, i.e. cool the compressed air from an upstream stage before it enters a downstream stage.

## Claims

1. Duct (1) for interconnecting separate stages of a compressor or a compressor and an intercooler of an internal combustion engine, which duct (1) comprises a lumen (2) for conveying compressed air and is **characterised by** at least one channel (3) for a cooling liquid, which channel at least partially surrounds the lumen (3B) and/or extends inside the lumen (3A).

2. Duct (1) according to claim 1, wherein at least one channel (3A) for a cooling liquid extends inside and preferably across the lumen (2).

3. Duct (1) according to claim 1 or 2, wherein at least one of the channels (3) for a cooling liquid undulates about at least part of respectively inside the lumen (2).

4. Duct (1) according to any one of the preceding claims, comprising fins (8) and/or projections extending inside the lumen (2).

5. Duct according to claim 4, wherein the fins (8) interconnect the inner wall of the lumen (2) and the channel(s) (3) for a cooling liquid extending inside the lumen (2).

6. Duct (1) according to any one of the preceding claims, which has been obtained by moulding, preferably sand-, lost foam- or permanent die moulding, a metal, preferably aluminium, and wherein the walls of the lumen (2) and the channel(s) (3) and, if present, the fins (8) and/or projections, form an integral whole.

7. Internal combustion engine, in particular a diesel engine for commercial vehicles, comprising a compressor, an intercooler, and a duct (1) according to any one of the preceding claims interconnecting separate stages of the compressor and/or an outlet of the compressor and an inlet of the intercooler.

8. Internal combustion engine according to claim 7, wherein the lumen (2) for compressed air diverges towards the intercooler.
